# EUROPÄISCHE PATENTANMELDUNG

(11) **EP 1 884 794 A2**
(43) Veröffentlichungstag der Anmeldung: **06.02.2008**
(21) Anmeldenummer: 07012993.7
(22) Anmeldetag: 03.07.2007
(51) Int. Cl.: G01S 5/00

(54) **Vorrichtung und Verfahren zur Ermittlung der geographischen Position einer Person**

(30) Priorität: 02.08.2006 DE 102006036375
(71) Anmelder: Navigon AG, 20251 Hamburg (DE)
(72) Erfinder: Katzer, Jochen, 91605 Bergtshofen (DE)
(74) Vertreter: von den Steinen, Axel

(57) **Zusammenfassung**

Die Erfindung betrifft eine Anordnung und ein Verfahren zur Lokalisierung der geographischen Position einer Person. Die Lokalisierungsanordnung umfasst eine mit der Person verbindbare Sendeeinheit (5, 6, 7) sowie eine Empfangseinheit (1) zur Anzeige des Aufenthaltsorts der Person.

Die Erfindung zeichnet sich dadurch aus, dass die Sendeeinheit (5, 6, 7) einen GPS-Empfänger umfasst und per drahtloser Kommunikation mit der Empfangseinheit (1) verbindbar ist.

Die Erfindung ermöglicht sowohl hohe Genauigkeit bei der Lokalisierung als auch Positionsermittlung über große Entfernungen hinweg. Das Verfahren und die kostengünstig produzierbare Vorrichtung können dabei auch vom Laien auf einfache Weise eingesetzt werden.

## Beschreibung

Die Erfindung betrifft eine Vorrichtung zur Ermittlung der geographischen Position einer Person gemäß Patentanspruch 1, sowie ein Verfahren zur Ermittlung der geographischen Position einer Person gemäß Patentanspruch 17.

Vorrichtungen bzw. Verfahren zur Ermittlung der geographischen Position von Personen kommen mit Vorteil dann zum Einsatz, wenn Personen - beispielsweise, jedoch keineswegs ausschließlich, aus Sicherheitserwägungen heraus - aus der Ferne zu lokalisieren sind. Bekannte Vorrichtungen bzw. Verfahren zur Lokalisierung von Personen basieren dabei beispielsweise auf dem Prinzip der Funkpeilung, wobei ein mit der Person verbundener Funksender mit einem entsprechenden Peilempfänger aus der Ferne lokalisiert wird.

Die Lokalisierung von Personen mittels Funksender und Peilempfänger ist jedoch äußerst aufwändig, und es wird damit zudem oftmals eine nicht ausreichende Genauigkeit erzielt.

Ferner erfordert die Lokalisierung von Personen mittels Peilempfänger eine direkte Funkverbindung zwischen dem Funksender und dem Peilempfänger, was je nach Geländeform sowie mit zunehmender Entfernung zwischen Funksender und Peilempfänger problematisch ist. Schließlich erfordert die Handhabung der hierzu erforderlichen, komplizierten Geräte spezielles Fachwissen und kann somit lediglich von ausgebildeten Spezialisten ausgeführt werden, was mit vergleichsweise hohen Kosten verbunden ist.

Die Lokalisierung von Personen mittels der bekannten Technik der Funkpeilung bietet sich damit allenfalls für geringe Entfernungen und für spezielle Einsatzzwecke an. Ein breiter Einsatz insbesondere auch durch den Laien oder Endverbraucher - beispielsweise die Ermittlung des momentanen Aufenthaltsorts von Kindern durch deren Eltern - ist mit den aus dem Stand der Technik bekannten Geräten und Verfahren somit praktisch ausgeschlossen.

Mit diesem Hintergrund ist es die Aufgabe der vorliegenden Erfindung, eine Vorrichtung bzw. ein Verfahren zur Ermittlung der geographischen Position von Personen zu schaffen, mit der bzw. mit dem sich die genannten, im Stand der Technik vorhandenen Nachteile überwinden lassen. Insbesondere soll mit der Erfindung sowohl eine hohe Genauigkeit der Lokalisierung als auch eine Positionsermittlung über große Entfernungen hinweg ermöglicht werden; das Verfahren und die Vorrichtung sollen ferner von jedermann einfach und mit geringstmöglichem Aufwand bei gleichzeitig großer Flexibilität einsetzbar, wie auch auf der Produktseite kostengünstig darstellbar sein.

Diese Aufgabe wird durch eine Anordnung gemäß Patentanspruch 1, bzw. durch ein Verfahren mit den Merkmalen des Patentanspruchs 17 gelöst.

Bevorzugte Ausführungsformen sind Gegenstand der Unteransprüche.

Die Vorrichtung bzw. Anordnung gemäß der Erfindung dient zur Ermittlung der geographischen Position zumindest einer Person. Hierzu umfasst die Anordnung in für sich genommen zunächst einmal bekannter Weise eine mit der Person verbindbare, akkugespeiste Sendeeinheit, sowie eine Empfangseinheit zur Anzeige der geographischen Position der Person.

Erfindungsgemäß zeichnet sich die Anordnung jedoch dadurch aus, dass die Sendeeinheit einen Satelitenortungsempfänger, beispielsweise einen GPS-Empfänger oder Galileo-Empfänger, umfasst und per drahtloser Kommunikation mit der Empfangseinheit verbindbar ist.

Dies ist insbesondere insofern vorteilhaft, als auf diese Weise die eigentliche Ermittlung der genauen Position der Sendeeinheit bzw. der zu lokalisierenden Person nicht mehr aufwändig und mit oft unzureichender Genauigkeit und Zuverlässigkeit durch die Empfangseinheit erfolgen muss, sondern dies vielmehr durch die mit der zu lokalisierenden Person verbundene Sendeeinheit erfolgt. Die von der Sendeeinheit mit praktisch beliebiger Genauigkeit ermittelte Position der zu lokalisierenden Person wird sodann per drahtloser Kommunikation von der Sendeeinheit zur Empfangseinheit übertragen, und muss dort lediglich noch zur Anzeige gebracht werden.

Ein weiterer Vorteil der erfindungsgemäßen Anordnung liegt somit auch darin, dass im Unterschied zum Stand der Technik für die eigentliche Positionsbestimmung keinerlei direkte Verbindung zur Empfangseinheit, geschweige denn eine peilungsfähige Funkverbindung erforderlich ist. Es muss lediglich die von der Sendeeinheit ermittelte Position auf geeignete Weise drahtlos an die Empfangseinheit übermittelt werden, wozu jedoch eine Vielzahl von geeigneten Kommunikationswegen existiert.

Damit ist die Verwirklichung der Erfindung zunächst einmal unabhängig von der tatsächlich eingesetzten Kommunikationstechnik zwischen Sendeeinheit und Empfangseinheit, solange die verwendete Kommunikationstechnik eine zeitnahe und sichere Übertragung insbesondere der Positionsdaten zwischen Sendeeinheit und Empfangseinheit erlaubt.

Gemäß einer besonders bevorzugten Ausführungsform der Erfindung erfolgt die drahtlose Kommunikation zwischen Sendeeinheit und Empfangseinheit jedoch als Datenaustausch via SMS-Textnachriehten. Die Kommunikation zwischen Sendeeinheit und Empfangseinheit mittels des Austauschs von SMS-Nachrichten zeichnet sich insbesondere durch Kostengünstigkeit und hohe Zuverlässigkeit aus. Ein wesentlicher Vorteil der Nutzung bestehender Mobilfunknetzwerke mit den dort angebotenen SMS-Übertragungswegen besteht dabei darin, dass die Sendeleistung der Sendeeinheit unabhängig von der Entfernung zwischen Sendeeinheit und Empfangseinheit gleichbleibend gering gehalten werden kann. Denn dank der Funkzellen und des Infrastrukturhintergrunds des jeweiligen Mobilfunknetzwerks ist keine direkte Funkverbindung zwischen Sendeeinheit und Empfangseinheit erforderlich. Alternativ zur direkten Kommunikation zwischen Sendeeinheit und Empfangseinheit via SMS-Textnachrichten kann auch eine indirekte Kommunikation vorgesehen sein. Dazu kann die geographischen Position via GPRS-Datenaustausch auf einem Server hinterlegt werden. Die Position kann dann später vom Server abgerufen werden.

Der Datenaustausch zwischen Sendeeinheit und Empfangseinheit mittels SMS-Nachrichten ist auch insofern vorteilhaft, als eine vorübergehende Nichterreichbarkeit der Sendeeinheit oder der Empfangseinheit die Datenübertragung nicht beeinträchtigt, da die Infrastruktur des Mobilfunknetzwerks dafür sorgt, dass eine momentan nicht zustellbare SMS-Nachricht mehrfach solange gesendet wird, bis die erfolgreiche Zustellung an den Empfänger gemeldet wird.

Insbesondere mit diesem Hintergrund ist es gemäß einer weiteren bevorzugten Ausführungsform der Erfindung vorgesehen, dass Sendeeinheit und/oder Empfangseinheit der erfindungsgemäßen Lokalisierungsanordnung ein standardisiertes, also in Form einer integrierten Schaltung vorliegendes GSM- bzw. CDMA-Modul enthalten, bzw. dass die Sendeeinheit ein standardisiertes GPS-Modul enthält.

Der Einsatz von standardisierten bzw. integrierten GSM-, CDMA- und/oder GPS-Modulen ist vorteilhaft insofern, als Sendeeinheit bzw. Empfangseinheit auf diese Weise besonders kostengünstig und kompakt sowie zuverlässig und mit geringem Energieverbrauch ausgeführt werden können.

Gemäß einer weiteren Ausführungsform der Erfindung ist vorgesehen, dass die Sendeeinheit, neben der Positionsbestimmung via Satelitenortung, zusätzlich zur Positionsbestimmung über die jeweilige GSM-Funkzelle eingerichtet ist. Diese Ausführungsform ist vorteilhaft insofern, als auf diese Weise im Sinne einer Redundanz auch dann noch eine ungefähre Ortsbestimmung der Sendeeinheit erfolgen kann, wenn unter bestimmten Randbedingungen eine Satelitenortung nicht möglich ist.

Letzteres kann beispielsweise dann der Fall sein, wenn sich die zu lokalisierende Person mit der Sendeeinheit in einem Gebäude, in einem Kraftfahrzeug, oder an einem anderen Ort befindet, an dem keine oder lediglich eingeschränkte Sichtverbindung zu den Ortungssatelliten besteht. In einem solchen Fall kann die Sendeeinheit - mit verringerter Genauigkeit - problemlos immer noch derjenigen Funkzelle des Mobilfunknetzes zugeordnet werden, in der sie sich momentan befindet.

Nach einer weiteren, besonders bevorzugten Ausführungsform der Erfindung verfügt die Sendeeinheit über ein nicht bzw. nur mit Spezialwerkzeug zu öffnendes Gehäuse. Dabei ist die Sendeeinheit vorzugsweise so eingerichtet, dass im Fall der unbefugten Öffnung des Gehäuses der Sendeeinheit ein Notruf abgesetzt wird. Diese Ausführungsformen sind insbesondere vorteilhaft in Bezug auf Manipulationssicherheit der Sendeeinheit, in Bezug auf Vandalensicherheit und Kidnappingschutz.

Eine weitere Ausführungsform der Erfindung sieht ferner vor, dass die Sendeeinheit eine fest integrierte Nutzeridentifikation aufweist. Eine fest integrierte Nutzeridentifikation - die beispielsweise in Form einer fest in die Sendeeinheit eingebauten SIM-Karte oder in Form einer anderweitig fest der Sendeeinheit zugeordneten Telefonnummer bzw. ID-Nummer bestehen kann - besitzt den Vorteil, dass die Sendeeinheit auf diese Weise einen besonders einfachen, geschlossenen Aufbau erhalten kann.

Mit einem ähnlichen Hintergrund ist gemäß einer weiteren, besonders bevorzugten Ausführungsform der Erfindung vorgesehen, dass die Sendeeinheit und/oder die Empfangseinheit eine Induktionseinrichtung zur berührungslosen Aufladung eines Akkumulators der Sendeeinheit bzw. der Empfangseinheit aufweist. Dies bringt den insbesondere in Bezug auf die Sendeeinheit relevanten Vorteil mit sich, dass das Gehäuse hermetisch dicht und verschlossen ausgeführt werden kann. So können beispielsweise die Gehäusehälften der Sendeeinheit bei dieser Ausführungsform der Erfindung unlösbar verschweißt oder dicht und fest miteinander verklebt sein.

Nach einer weiteren Ausführungsform der Erfindung ist die Sendeeinheit zur deutlich sichtbaren Kennzeichnung mit dem Namen der zu lokalisierenden Person eingerichtet. Dies ist vorteilhaft insofern, als die Sendeeinheit auf diese Weise leicht und schnell einer Person zugeordnet werden kann, insbesondere im Fall mehrerer einer Empfangseinheit zugeordneten Sendeeinheiten. Im Beispielfall einer Familie mit mehreren Kindern kann somit die jeweils einem Kind zugeordnete Sendeeinheit schnell und zuverlässig von einer anderen Sendeeinheit unterschieden werden, die einem anderen Kind zugeordnet ist; und es können somit Verwechslungen bei der Lokalisierung der Kinder vermieden werden.

Nach einer weiteren Ausführungsform der Erfindung ist vorgesehen, dass die Sendeeinheit zur Kommunikation ausschließlich mit der zugeordneten Empfangseinheit eingerichtet ist. Auch diese Ausführungsform steht insbesondere im Dienst der Manipulationssicherheit, denn auf diese Weise kann die zu lokalisierende Person ausschließlich über die zugehörige Empfangseinheit geortet werden, nicht jedoch über andere Empfangseinheiten, selbst dann nicht, wenn Dritten die Identifikation, die ID-Nummer bzw. Telefonnummer der Sendeeinheit bekannt werden sollte.

Im Hinblick auf Redundanz insbesondere bei einem etwaigen Ausfall der Empfangseinheit ist dabei gemäß einer alternativen Ausführungsform der Erfindung vorgesehen, dass die Sendeeinheit - neben den Ortungsbefehlen der zugeordneten Empfangseinheit - auch Ortungsbefehle einer weiteren Empfangseinheit akzeptiert. Als weitere Empfangseinheit, deren Ortungsbefehle von der Sendeeinheit akzeptiert werden, kommt dabei insbesondere eine Notrufzentrale, bzw. ein Servicecenter des Herstellers oder eines Mobilfunkbetreibers in Betracht.

Nach einer weiteren Ausführungsform der Erfindung ist vorgesehen, dass die Sendeeinheit und/oder die Empfangseinheit der Lokalisierungsanordnung jeweils ein Mobiltelefon darstellt. Auf diese Weise lässt sich eine vorteilhafte Funktionsvereinigung mehrerer Geräte erzielen; es ist bei dieser Ausführungsform der Erfindung somit neben der Ortungsfunktion zusätzlich auch bidirektionale Sprachkommunikation über ein und dasselbe Gerät möglich.

Gemäß einer weiteren Ausführungsform der Erfindung ist die Sendeeinheit lösbar mit einem Befestigungselement, beispielsweise mit einem Karabiner oder Schlüsselring verbunden. Das Befestigungselement dient dabei zur stabilen Verbindung der Sendeeinheit insbesondere mit der Kleidung der zu lokalisierenden Person. Dank der lösbaren Verbindung zwischen Sendeeinheit und Befestigungselement lässt sich die Sendeeinheit einfach und schnell mit der Kleidung der zu lokalisierenden Person verbinden, und die Sendeeinheit kann ebenso einfach von der Kleidung wieder entfernt werden, insbesondere zum Zweck des Ladevorgangs der Sendeeinheit.

Alternativ ist dabei die Sendeeinheit zusätzlich zur Absetzung eines Notrufs im Fall der Ablösung der Sendeeinheit vom Befestigungselement eingerichtet. Dies bedeutet mit anderen Worten, dass im Fall der unbefugten Entfernung der Sendeeinheit von der zu lokalisierenden Person - im Sinne des Manipulations- bzw. Kidnappingschutzes - von der Sendeeinheit unmittelbar ein Notruf an die Empfangseinheit abgesetzt wird.

Nach einer weiteren Ausführungsform der Erfindung umfasst die Lokalisierungsanordnung eine unmittelbar mit dem Körper der zu lokalisierenden Person verbindbare Transpondereinheit. Dabei ist die Transpondereinheit per drahtloser Kommunikation mit der Sendeeinheit verbindbar. Gleichzeitig ist die Sendeeinheit so eingerichtet, dass im Fall der Unterbrechung der Kommunikation zwischen Transpondereinheit und Sendeeinheit - sprich bei unzulässiger Vergrößerung der Entfernung zwischen Sendeeinheit und Transpondereinheit - ein Notruf an die Empfangseinheit abgesetzt werden kann.

Auf diese Weise lässt sich eine noch weiter verbesserte Manipulations- bzw. Kidnappingsicherheit erzielen, da bei unbefugter Entfernung der Sendeeinheit von der zu lokalisierenden Person so mit großer Sicherheit und Zuverlässigkeit die Auslösung des Notrufs erfolgt.

Mit demselben Hintergrund ist es gemäß einer weiteren Ausführungsform der Erfindung - zur weiteren Verbesserung der Manipulationssicherheit - vorgesehen, dass die Transpondereinheit in den Körper der Person einbringbar, bzw. unlösbar mit dem Körper der Person verbindbar ist. So ist es insbesondere vorstellbar, eine miniaturisierte Transpondereinheit - durch Injektion unter die Haut, durch Herunterschlucken, in Form einer Zahnfüllung, durch Aufkleben auf einen Zahn oder Fingernagel oder dergleichen - temporär oder dauerhaft unlösbar mit dem Körper der zu lokalisierenden Person zu verbinden. Auf diese Weise lässt sich praktisch vollständige Manipulationssicherheit erzielen, bzw. es kann eine sichere Auslösung des Alarms für den Fall der unbefugten Entfernung der Sendeeinheit von der zu lokalisierenden Person gewährleistet werden.

Die Erfindung betrifft ferner ein Verfahren zur Ermittlung der geographischen Position einer Person mittels einer Sendeeinheit und einer Empfangseinheit. Die Sendeeinheit umfasst dabei einen Satelitenortungsempfänger und die Empfangseinheit eine Einrichtung zur Anzeige der geographischen Position der Person.

Im Rahmen des erfindungsgemäßen Verfahrens erfolgt dabei in einem ersten Verfahrenschritt a) die Eingabe des Befehls zur Lokalisierung der Person an der Empfangseinheit.

In einem weiteren Verfahrenschritt b) übermittelt die Empfangseinheit den Lokalisierungsbefehl drahtlos an die der zu lokalisierenden Person zugeordnete Sendeeinheit.

Danach erfolgt in einem weiteren Verfahrenschritt c) die drahtlose Übermittlung der von der Sendeeinheit ermittelten aktuellen geographischen Position der Sendeeinheit - bzw. der zu lokalisierenden Person - an die Empfangseinheit.

In einem weiteren Verfahrenschritt d) erfolgt sodann die vorzugsweise kartographische Ausgabe bzw. Anzeige der geographischen Position der zu lokalisierenden Person an der Empfangseinheit.

Der Vorteil des erfindungsgemäßen Verfahrens liegt somit insbesondere darin, dass auf diese Weise die eigentliche Ermittlung der Position der Sendeeinheit bzw. der zu lokalisierenden Person nicht mehr aufwändig und mit zumeist unzureichender Genauigkeit durch die Empfangseinheit erfolgen muss, sondern dass die Positionsermittlung vielmehr durch die Sendeeinheit selbst erfolgt. Die von der Sendeeinheit mit hoher Genauigkeit ermittelte Position muss somit lediglich noch per drahtloser Kommunikation an die Empfangseinheit übertragen und dort angezeigt werden.

Ein weiterer Vorteil des erfindungsgemäßen Verfahrens liegt demzufolge auch darin, dass zum Zweck der Positionsbestimmung bzw. während der Positionsbestimmung keinerlei Verbindung mit der Empfangseinheit mehr erforderlich ist. Es muss lediglich die von der Sendeeinheit ermittelte Position der zu lokalisierenden Person anschließend auf geeignete Weise drahtlos an die Empfangseinheit übermittelt werden.

Damit ist das erfindungsgemäße Verfahren zunächst einmal auch unabhängig von dem eingesetzten drahtlosen Kommunikationsweg zwischen Sendeeinheit und Empfangseinheit, solange dieser Kommunikationsweg eine zeitnahe und sichere Übertragung der Positionsdaten zwischen Sendeeinheit und Empfangseinheit erlaubt.

Gemäß einer besonders bevorzugten Ausführungsform des erfindungsgemäßen Verfahrens erfolgt jedoch die drahtlose Kommunikation zwischen Sendeeinheit und Empfangseinheit in den Verfahrensschritten b) und c) als Datenaustausch via SMS.

Die Kommunikation zwischen Sendeeinheit und Empfangseinheit mittels Austausch von SMS-Nachrichten zeichnet sich insbesondere durch Kostengünstigkeit und Zuverlässigkeit aus. Ein Vorteil der Nutzung bestehender Mobilfunknetzwerke mit den dort angebotenen SMS-Übertragungswegen besteht dabei auch darin, dass die Sendeleistung der Sendeeinheit - unabhängig von der Entfernung zwischen Sendeeinheit und Empfangseinheit - gering bleiben kann, da dank der stets in Funkzellen aufgeteilten Mobilfunknetzwerke keine direkte Funkverbindung zwischen Sendeeinheit und Empfangseinheit erforderlich ist.

Gemäß einer weiteren Ausführungsform der Erfindung ist vorgesehen, dass die Ermittlung der aktuellen geographischen Position der Sendeeinheit alternativ auch mittels Ortung über die jeweilige GSM-Funkzelle erfolgen kann, in der sich die Sendeeinheit gerade befindet. Dies ist vorteilhaft insofern, als auf diese Weise auch dann noch eine ungefähre Ortsbestimmung der Sendeeinheit erfolgen kann, wenn im Fall der Abschattung der Ortungs satelliten eine Satellitenortung nicht möglich sein sollte.

Gemäß einer weiteren, besonders bevorzugten Ausführungsform des erfindungsgemäßen Verfahrens wird im Fall unzulässiger Manipulationen an der Sendeeinheit, beispielsweise bei der Öffnung des Gehäuses oder beim Ablösen der Sendeeinheit von der Kleidung, ein Notruf abgesetzt. Diese Ausführungsform des Verfahrens bietet besonders hohen Schutz in Bezug auf Manipulationssiclcerheit, Vandalen- bzw. Kidnappingschutz.

Im Folgenden wird die Erfindung anhand einer lediglich ein Ausführungsbeispiel darstellender Zeichnung näher erläutert.

Es zeigt die einzige
- **Fig**.: in nicht maßstabsgetreuer und schematischer Darstellung eine Ausführungsform einer erfindungsgemäßen Lokalisierungsanordnung.

In der **Fig**. ist in höchst schematischer Weise eine Ausführungsform einer Anordnung zur Lokalisierung von Personen gemäß der vorliegenden Erfindung dargestellt.

Man erkennt zunächst einmal die Empfangseinheit 1, die insbesondere ein Gehäuse 2 und einen Bildschirm 3 umfasst. Weiter ist die Empfangseinheit 1 noch mit einem Ein-/Aus-Schalter 4 ausgestattet. Neben der Empfangseinheit gehen aus der Fig. ferner auch noch drei Sendeeinheiten 5, 6, 7 hervor.

Die Sendeeinheiten 5, 6, 7 sind bei dem dargestellten Ausführungsbeispiel in Form einer Kugel bzw. in Form eines symbolisierten Balles ausgeführt und umfassen jeweils eine als Schlüsselanhänger 8, 9 gestaltete Befestigungsvorrichtung zur Verbindung insbesondere mit der Kleidung der zu lokalisierenden Person.

Empfangseinheit 1 und Sendeeinheiten 5, 6, 7 stehen miteinander in drahtloser Kommunikationsverbindung. Die Verbindung zwischen Empfangseinheit 1 und Sendeeinheiten 5, 6, 7 erfolgt allerdings nicht direkt per Funk, sondern vorzugsweise über ein GSM-Mobilfunknctz, und dort speziell über den Mobilfunkdienst SMS.

Gegenüber einer direkten Funkverbindung besitzt die Kommunikation zwischen Empfangseinheit 1 und Sendeeinheiten 5, 6, 7 via GSM/SMS zunächst einmal den entscheidenden Vorteil der Entfernungsunabhängigkeit. Ferner ist die Kommunikation per Austausch von SMS-Nachrichten kostengünstig und besonders zuverlässig, da vom Mobilfunkbetreiber SMS-Nachrichten auch dann - zeitverzögert - zugestellt werden, wenn der Empfänger für kurze Zeit nicht erreichbar sein sollte.

Ein typischer Ablauf zur Lokalisierung einer Person - beispielsweise zur Überprüfung des Aufenthaltsortes eines Kindes durch die Eltern - verläuft unter Einsatz der erfindungsgemäßen Anordnung bzw. des erfindungsgemäßen Verfahrens wie folgt:

Zunächst schaltet der Bediener, vorliegend also das Elternteil, die Empfangseinheit 1 mittels des Ein-/Aus-Schalters ein. Im Hinblick auf eine einfache Bedienung besitzt die dargestellte Ausführungsform der Empfangseinheit 1 neben dem Ein-/Aus-Schalters keinerlei weiteren Hardware-Bedienelemente. Vielmehr erfolgt die gesamte Bedienung über den als Touchscreen ausgeführten berühcungsempfindlichen Bildschirm 3.

Auf dem Bildschirm erscheint nach dem Einschalten der Empfangseinheit 1 ein Button bzw. ein Eingabeelement mit der Bezeichnung "Person finden" o-dgl. Der Bediener berührt dieses Eingabeelement auf dem Touchscreen der Empfangseinheit 1. Anschließend erscheint eine Liste der in der Empfangseinheit 1 registrierten Sendeeinheiten 2, im vorliegend betrachteten Beispiel also eine die beiden Namen "Paul" und "Lisa" umfassende Liste von Buttons bzw. Eingabeelementen.

Der Bediener berührt das Eingabeelement mit dem Namen desjenigen Kindes, dessen Aufenthaltsort festgestellt werden soll; vorliegend sei dies das mit "Paul" gekennzeichnete Eingabeelement. Das Drücken des Eingabeelements "Paul" löst nun die Lokalisierung derjenigen Sendeeinheit 5 aus, die Paul mit sich führt.

Zu diesem Zweck übermittelt die Empfangseinheit 1 via SMS den Befehl zur Lokalisierung an die Sendeeinheit 5 von Paul. Die Sendeeinheiten 5, 6, 7 sind dabei bevorzugt so eingerichtet, dass sie permanent und in regelmäßigen Abständen via GPS oder Galileo ihre jeweilige Position selbsttätig bestimmen und für einige Zeit speichern. Die Positionsbestimmung könnte - beispielsweise zum Zweck der Energieersparnis - aber auch erst im Fall einer entsprechenden Anforderung durch die Empfangseinheit 1 erfolgen.

In jedem Fall jedoch übermittelt die Sendeeinheit 5 von Paul infolge der von der Empfangseinheit 1 abgesetzten und von der Sendeeinheit 5 empfangenen SMS-Positionsanforderung ihre eigene momentane Position zurück an die Empfangseinheit 1.

Auch diese Rückübermittlung der Momentanposition von Sendeeinheit 5 erfolgt wiederum mittels einer SMS-Nachricht, die von der Sendeeinheit 5 über das Mobilfunknetzwerk an die Empfangseinheit 1 abgesetzt wird.

Die Empfangseinheit 1 wertet sodann die durch die Sendeeinheit 5 von Paul abgesetzte Kurznachricht aus und zeigt schließlich die übermittelte geographische Position von Paul auf dem eingebauten Bildschirm 3 der Empfangseinheit 1 an, wie aus der Fig. ersichtlich.

Bei dem dargestellten Ausführungsbeispiel ist außer der Sendeeinheit 5 von Paul eine weitere Sendeeinheit 6 an der Empfangseinheit 1 angemeldet. Diese weitere Sendeeinheit 6 ist im Ausführungsbeispiel einem weiteren Kind namens Lisa, beispielsweise der Schwester von Paul, zugeordnet. Somit können die Eltern mit Hilfe der Empfangseinheit 1, beziehungsweise mit Hilfe der erfindungsgemäßen Lokalisierungsanordnung 1, 5, 6 jederzeit den momentanen Aufenthaltsort ihrer Kinder auf einfachste und zuverlässige Weise feststellen.

Bei Bedarf können jederzeit weitere Sendeeinheiten 7 usw. an der Empfangseinheit 1 registriert bzw. angemeldet werden, so dass auch weitere Kinder oder Personen lokalisiert werden können.

Beim dargestellten Ausführungsbeispiel sind die Sendeeinheiten 5, 6, 7 als kompakte kugelförmige bzw. ballartige Schlüsselanhänger gestaltet. Dank der bereits eingebauten SIM-Karten und dank der induktiven Aufladbarkeit des eingebauten Akkus können die Sendeeinheiten 5, 6, 7 werksseitig hermetisch verschlossen werden, und sind damit äußerst robust und manipulationssichcr. Zusätzliche Manipulationssicherheit lässt sich dadurch erreichen, dass die Schlüsselanhänger 8, 9 zur Anbringung der Sendeeinheiten 5, 6, 7 an der Kleidung so ausgebildet sind, dass beim Lösen der Verbindung zwischen Sendeeinheit und Kleidung ein Alarmsignal an die Empfangseinheit 1 abgesetzt wird.

Um die unnötige Absetzung eines Alarmsignals bei der Entfernung der Sendeeinheit 5, 6, 7 von der Kleidung zum Zweck der Aufladung der Sendeeinheit 5, 6, 7 zu vermeiden, kann ferner vorgesehen werden, dass eine Alarmierung dann nicht erfolgt, wenn die Sendeeinheit unmittelbar nach der Entfernung von der Kleidung in die zugehörige induktive Aufladestation gelegt wird.

Im Ergebnis wird somit deutlich, dass mit der Erfindung die Möglichkeiten zur geographischen Lokalisierung von Personen erweitert und gleichzeitig entscheidend vereinfacht werden. Insbesondere ermöglicht die Erfindung sowohl hohe Genauigkeit bei der Lokalisierung, als auch Positionsermittlung über beliebige Entfernungen hinweg, wobei das erfindungsgemäße Verfahren und die kostengünstig produzierbare erfindungsgemäße Vorrichtung auch von Laien bzw. vom Endverbraucher auf einfachste Weise eingesetzt werden können.

Die Erfindung lässt sich damit vorteilhaft insbesondere - jedoch keineswegs ausschließlich - zur Verbesserung der Sicherheit von Familien mit Kindern einsetzen, beispielsweise während der Phase, in der die Kinder beginnen, sich selbstständig in der Stadt bzw. in der weiteren Entfernung der elterlichen Wohnung zu bewegen.

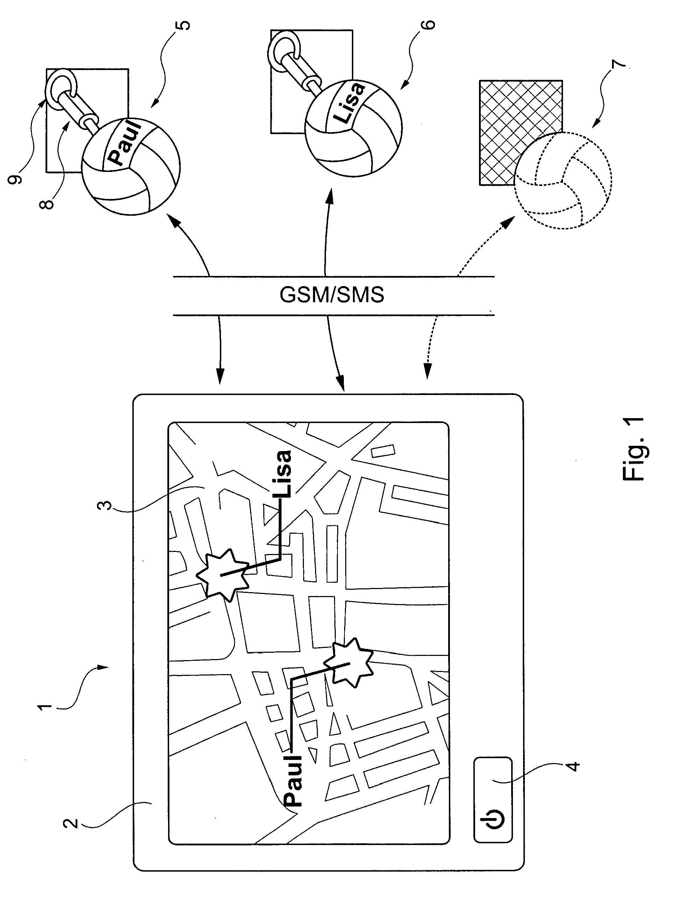

## Patentansprüche

1. Anordnung zur Lokalisierung der geographischen Position zumindest einer Person, die Anordnung umfassend eine mit der Person verbindbare, akkugespeiste Sendeeinheit (5, 6, 7) sowie eine Empfangseinheit (1) zur Anzeige der geographischen Position der Person,
**dadurch gekennzeichnet,**
**dass** die Sendeeinheit (5, 6, 7) einen Satellitenortungsempfänger umfasst und per drahtloser Kommunikation mit der Empfangseinheit (1) verbindbar ist.

2. Lokalisierungsanordnung am nach Anspruch 1,
**dadurch gekennzeichnet,**
**dass** die drahtlose Kommunikation zwischen Sendeeinheit (5, 6, 7) und Empfangseinheit (1) als Datenaustausch via SMS oder als GPRS-Datenaustausch zur Hinterlegung der geographischen Position auf einem Server ausgebildet ist.

3. Lokalisierungsanordnung nach Anspruch 1 oder 2
**dadurch gekennzeichnet,**
**dass** Sendeeinheit (5, 6, 7) und/oder Empfangseinheit (1) ein standardisiertes GSM- bzw. CDMA-Modul enthalten.

4. Lokalisierungsanordnung nach einem der Ansprüche 1 bis 3,
**dadurch gekennzeichnet,**
**dass** die Sendeeinheit (5, 6, 7) ein standardisiertes GPS-Modul enthält.

5. Lokalisierungsanordnung nach einem der Ansprüche 1 bis 4,
**dadurch gekennzeichnet,**
**dass** die Sendeeinheit (5, 6, 7) zur Ortung zusätzlich über die jeweilige GSM- Funkzelle eingerichtet ist.

6. Lokalisierungsanordnung nach einem der Ansprüche 1 bis 5,
**dadurch gekennzeichnet,**
**dass** die Sendeeinheit (5, 6, 7) ein nicht bzw. nur mit Spezialwerkzeug zu öffnendes Gehäuse aufweist.

7. Lokalisierungsanordnung nach einem der Ansprüche 1 bis 6,
**dadurch gekennzeichnet,**
**dass** die Sendeeinheit (5, 6, 7) zur Absetzung eines Notrufs im Fall der Öffnung des Gehäuses eingerichtet ist.

8. Lokalisierungsanordnung nach einem der Ansprüche 1 bis 7,
**dadurch gekennzeichnet,**
**dass** die Sendeeinheit (5, 6, 7) eine fest integrierte Nutzeridentifikation aufweist.

9. Lokalisierungsanordnung nach einem der Ansprüche 1 bis 8,
**dadurch gekennzeichnet,**
**dass** Sendeeinheit (5, 6, 7) und/oder Empfangseinheit (1) eine Induktionseinrichtung zur berührungslosen Aufladung eines Akkumulators der Sendeeinheit (5, 6, 7) bzw. Empfangseinheit (1) aufweist.

10. Lokalisierungsanordnung nach einem der Ansprüche 1 bis 9,
**dadurch gekennzeichnet,**
**dass** die Sendeeinheit (5, 6, 7) mit dem Namen der zu lokalisierenden Person deutlich sichtbar kennzeichenbar ist.

11. Lokalisierungsanordnung nach einem der Ansprüche 1 bis 10,
**dadurch gekennzeichnet,**
**dass** die Sendeeinheit (5, 6, 7) zur drahtlosen Kommunikation ausschließlich mit der zugeordneten Empfangseinheit (1) eingerichtet ist.

12. Lokalisierungsanordnung nach einem der Ansprüche 1 bis 10,
**dadurch gekennzeichnet,**
**dass** die Sendeeinheit (5, 6, 7) zur drahtlosen Kommunikation ausschließlich mit der zugeordneten Empfangseinheit (1) sowie mit einer weiteren Empfangseinheit (1) eingerichtet ist.

13. Lokalisierungsanordnung nach einem der Ansprüche 1 bis 12,
**dadurch gekennzeichnet,**
**dass** die Sendeeinheit (5, 6, 7) und/oder die Empfangseinheit (1) ein Mobiltelefon ist.

14. Lokalisierungsanordnung nach einem der Ansprüche 1 bis 13,
**dadurch gekennzeichnet,**
**dass** die Sendeeinheit (5, 6, 7) lösbar mit einem Befestigungselement (9) zur Verbindung der Sendeeinheit (5, 6, 7) mit insbesondere Kleidung der zu lokalisierenden Person verbunden ist.

15. Lokalisierungsanordnung nach Anspruch 14,
**dadurch gekennzeichnet,**
**dass** die Sendeeinheit (5, 6, 7) zur Absetzung eines Notrufs im Fall der Lösung vom Befestigungselement (9) eingerichtet ist.

16. Lokalisierungsanordnung nach einem der Ansprüche 1 bis 15,
**gekennzeichnet durch**
eine mit dem Körper der zu lokalisierenden Person unmittelbar verbindbare Transpondereinheit, wobei die Transpondereinheit per drahtloser Kommunikation mit der Sendeeinheit (5, 6, 7) in Verbindung bringbar ist, und wobei die Sendeeinheit (5, 6, 7) zur Absetzung eines Notrufs im Fall der Unterbrechung der Kommunikation zwischen Transpondereinheit und Sendeeinheit (5, 6, 7) eingerichtet ist.

17. Lokalisierungsanordnung nach Anspruch 16,
**dadurch gekennzeichnet,**
**dass** die Transpondereinheit in den Körper der Person einbringbar bzw. unlösbar mit dem Körper der Person verbindbar ist.

18. Verfahren zur Ermittlung der geographischen Position zumindest einer Person mittels einer mit der Person verbindbaren Sendeeinheit (5, 6, 7), sowie mittels einer Empfangseinheit (1) zur Anzeige der geographischen Position der Person, wobei die Sendeeinheit (5, 6, 7) einen Satellitenortungsempfänger umfasst, das Verfahren aufweisend die nachfolgenden Verfahrensschritte:
a) Befehlseingabe zur Lokalisierung der Person an der Empfangseinheit (1);
b) Drahtlose Übermittlung des Lokalisierungsbefehls an die Sendeeinheit (5, 6, 7) der Person;
c) Drahtlose Übermittlung der aktuellen geographischen Position der Sendeeinheit (5, 6, 7) durch die Sendeeinheit (5, 6, 7) an die Empfangseinheit (1); und
d) Anzeige der geographischen Position der Person an der Empfangseinheit (1).

19. Verfahren nach Anspruch 18,
**dadurch gekennzeichnet,**
**dass** die drahtlose Kommunikation zwischen Sendeeinheit (5, 6, 7) und Empfangseinheit (1) in den Verfahrensschritten b) und/oder c) als Datenaustausch via SMS oder als GPRS-Datenaustausch zur Hinterlegung der geographischen Position auf einem Server ausgebildet ist.

20. Verfahren nach Anspruch 18 oder 19,
**dadurch gekennzeichnet,**
**dass** die die Ermittlung der aktuellen geographischen Position der Sendeeinheit (5, 6, 7) zusätzlich und/oder alternativ mittels Ortung über die jeweilige CrSM-Funkzelle erfolgt.

21. Verfahren nach einem der Ansprüche 18 bis 20,
**dadurch gekennzeichnet,**
**dass** im Falle von unzulässigen Manipulationen an der Sendeeinheit (5, 6, 7) von der Sendeeinheit (5, 6, 7) ein Notruf abgesetzt wird.
